Europäisches Patentamt

European Patent Office

Office européen des brevets

(19)

(11) **EP 1 524 516 A1**

(12) **EUROPEAN PATENT APPLICATION**

(43) Date of publication:
**20.04.2005 Bulletin 2005/16**

(51) Int Cl.7: **G01N 23/207**

(21) Application number: **04254087.2**

(22) Date of filing: **08.07.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **17.10.2003 KR 2003072501**

(71) Applicant: **Samsung Electronics Co., Ltd.
Suwon-city, Gyeonggi-do (KR)**

(72) Inventors:
• **Kim, Ki-hong
Ansan-si, Gyeonggi-do (KR)**
• **Lee, Jong-sig
Anyang-si, Gyeonggi-do (KR)**

(74) Representative: **Ertl, Nicholas Justin
Elkington and Fife LLP,
Prospect House,
8 Pembroke Road
Sevenoaks, Kent TN13 1XR (GB)**

(54) **X-RAY DIFFRACTOMETER AND METHOD OF CORRECTING MEASUREMENT POSITION THEREOF**

(57)    Disclosed is an X-ray diffractometer that precisely analyzes a micro-crystal structure of a specimen by exactly measuring the distance between the specimen and a detector, and the position of the detector and a method of correcting a measurement position of the detector. The X-ray diffractometer includes: an X-ray generator; a first stage on which a specimen is loaded; a detector detecting an incident X-ray projected by the X-ray generator and diffracted by the specimen; a second stage on which the detector is installed; and a moving unit disposed between the second stage and the detector, moving the detector such that an interval between the specimen and the detector is varied. Also, the correcting method of the measurement position of the above X-ray diffractometer includes: loading the specimen on the first stage; continuously or intermittently detecting the X-ray diffracted by the specimen with the detector while moving the detector with the moving unit to measure a diffraction angle $2\theta$; calculating an error between a lattice interval of the specimen calculated from the diffraction angle $2\theta$ and an actual lattice interval of the specimen and calculating a required variation in an interval $D_2$ between the specimen and the detector from the calculated error; and moving the detector by a width corresponding to the required variation in the calculated interval $D_2$, wherein the crystal structure of the specimen is known beforehand.

FIG. 3

EP 1 524 516 A1

**EP 1 524 516 A1**

## Description

The present invention relates to an X-ray diffractometer that analyzes a micro-crystal structure of a material and method of correcting a measurement position of the X-ray diffractometer, and more particularly, to an X-ray diffractometer that precisely analyzes a micro-crystal structure of a specimen by exactly measuring the distance between a specimen and a detector, and the position of the detector and a method of correcting a measurement position of the detector.

Generally, an X-ray diffractometer analyzes a micro-crystal structure of a material by using a goniometer for measuring a diffraction angle and a counter for measuring the intensity of an X-ray. With the development of the diffractometer, a two-dimensional measuring apparatus such as a charge-coupled device (CCD) instead of a film is widely used to measure a diffracted X-ray.

The X-ray diffractometer using the CCD has remarkably reduced measurement error compared with the diffractometer using a film, enhancing the measurement preciseness by more than 100 times. Accordingly, when the material analysis is performed through the X-ray diffractometer using the CCD, the time required to analyze the crystal structure of a specimen can be shortened and the crystal structure and orientation of a material having the crystal directionality can be easily measured.

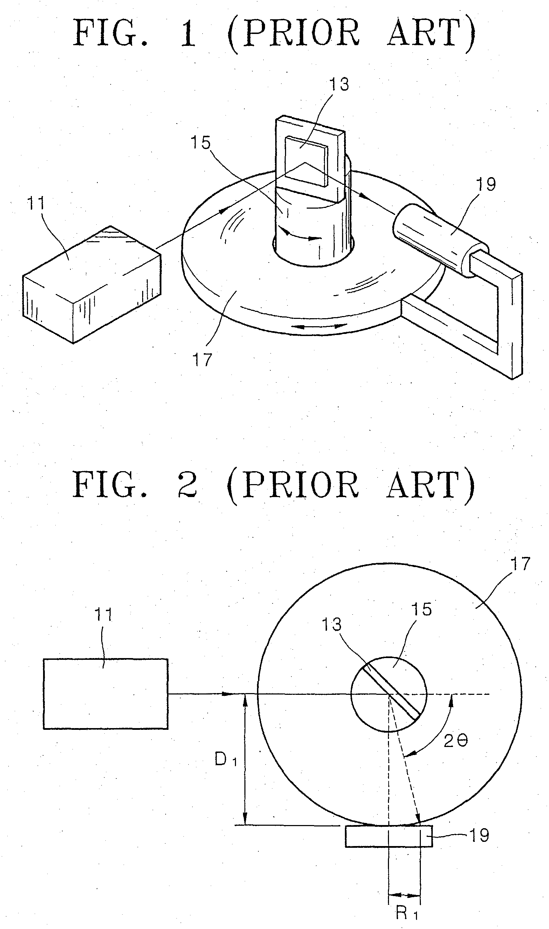

Referring to FIGS. 1 and 2, a conventional X-ray diffractometer includes an X-ray generator 11, a first stage 15 is on which a specimen 13 is loaded for analysis, a second stage 17 rotatably attached to the first stage 15 is, and a detector 19 is installed on the second stage 17 to detect an incident X-ray.

The first stage 15 can adjust the inclination of the specimen 13 with respect to the X-ray generator 11 by controlling the angular disposition of the specimen 13. The second stage 17 can rotate independent of the first stage 15. By rotating the second stage 17, it is possible to adjust the direction of the detector 19. The detector 19 is a CCD.

X-rays generated by the X-ray generator 11 is projected onto the specimen 13. The projected X-ray is diffracted with a diffraction angle $2\theta$ depending on the crystal structure of the specimen 13. The angle $\theta$ is an inherent value depending on the crystal structure of the specimen 13. By detecting a peak value of the diffracted light through the detector 19, it is possible to determine the crystal structure of the specimen 13. The detector 19 is separated by a predetermined interval $D_1$ from the specimen 13. After a distance $R_1$ between a position where the diffracted light is detected and a center of the detector 19 is measured, the diffraction angle $2\theta$ is obtained from the relationship between the interval $D_1$ and the distance $R_1$, thereby determining the crystal structure of the specimen 13.

The X-ray diffractometer has advantages in that the measurement preciseness is enhanced, the time required to analyze the crystal structure of the specimen is shortened, and the crystal structure and orientation of a material with the crystal directionality can be easily measured.

However, since the conventional X-ray diffractometer has a structure in which the interval $D_1$ between the specimen 13 and the detector 19 is fixed, the resolution and preciseness of the detector 19 are enhanced but a mechanical clearance in the interval $D_1$ between the specimen 13 and the detector 19 causes the preciseness to be reduced by half.

According to an aspect of the present invention, there is provided an X-ray diffractometer comprising: an X-ray generator; a first stage on which a specimen is loaded; a detector detecting an incident X-ray projected by the X-ray generator and diffracted by the specimen; a second stage on which the detector is installed; and a moving unit disposed between the second stage and the detector, moving the detector such that an interval between the specimen and the detector is varied.

According to another aspect of the present invention, there is provided a method of correcting a measurement position of an X-ray diffractometer comprising: an X-ray generator; a first stage on which a specimen is loaded; a detector detecting an incident X-ray projected by the X-ray generator and diffracted by the specimen; a second stage on which the detector is installed; and a moving unit disposed between the second stage and the detector, moving the detector such that an interval between the specimen and the detector is varied, the method comprising: loading the specimen on the first stage; continuously or intermittently detecting the X-ray diffracted in the specimen with the detector while moving the detector with the moving unit, to measure a diffraction angle $2\theta$; calculating an error between a lattice interval of the specimen calculated from the diffraction angle $2\theta$ and an actual lattice interval of the specimen and calculating a required variation in an interval $D_2$ between the specimen and the detector from the calculated error; and moving the detector by a width corresponding to the required variation in the calculated interval $D_2$, wherein the crystal structure of the specimen is known beforehand.

The present invention thus provides an X-ray diffractometer that precisely analyze a micro-crystal structure of a specimen by exactly measuring the distance between a specimen and a detector, and the position of the detector and a method of correcting a measurement position of the detector.

The above and other features and advantages of the present invention will become more apparent by describing in detail exemplary embodiments thereof with reference to the attached drawings in which:

FIG. 1 is a schematic perspective view of a conventional X-ray diffractometer;

FIG. 2 is a schematic plane view of the conventional X-ray diffractometer of FIG. 1;

FIG. 3 is a schematic perspective view of an X-ray diffractometer according to an embodiment of the present invention;

FIG. 4 is a schematic plane view of the X-ray diffractometer of FIG. 3;

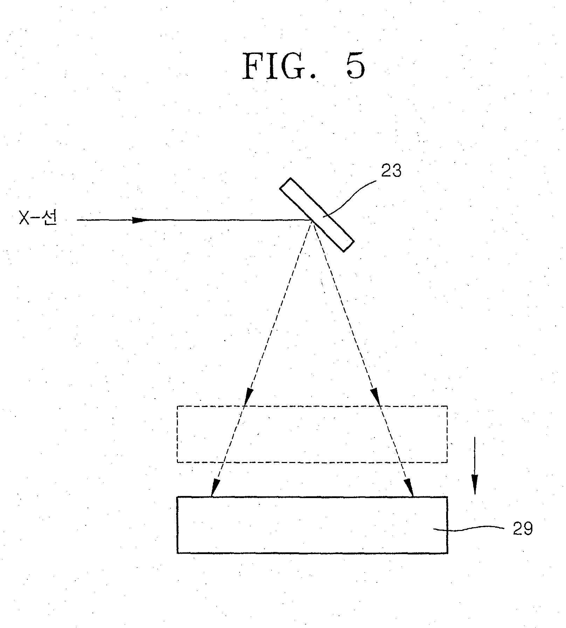

FIG. 5 is a view illustrating an operating state of the detector according to the present invention;

FIGS. 6A and 6B are graphs showing measurement results of peak values of diffracted light while moving the detector according to the present invention; and

FIGS. 7A and 7B are graphs showing variations in a peak position of diffracted light depending on variations in an interval between a specimen and the detector in X-axis and Y-axis, respectively.

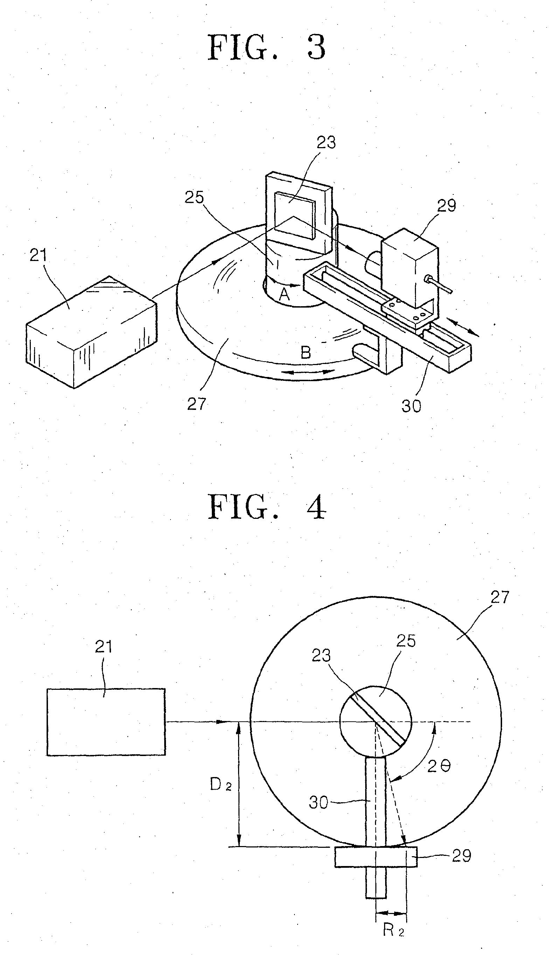

Referring to FIGS. 3 and 4, an X-ray diffractometer according to an embodiment of the present invention includes an X-ray generator 21, a first stage 25 on which an object specimen 23 is loaded for analysis, a detector 29 detecting an incident diffracted X-ray, a second stage 27 on which the detector 29 is installed, and a moving unit 30 provided between the second stage 27 and the detector 29 to move the detector 29 such that an interval between the specimen 23 and the detector 29 is varied.

The first stage 25 is rotatable in a direction A. Accordingly, by rotating the first stage 25, it is possible to adjust the inclination of the specimen 23 with respect to the X-ray generator 21.

The first stage 25 may include X-, Y-, and Z-stages such that in the first stage can move along an X-axis, a Y-axis and a Z-axis in addition to the aforementioned rotational motion. With the first stage 25 designed this way, it is possible to freely correct the position of the specimen 23 loaded on the first stage 25. Since the construction of a triaxial stage is well known to those skilled to the art, its detailed description is omitted.

The second stage 27 is rotatably attached to the first stage 25 and can rotate in a direction B. Accordingly, by rotating the second stage 25, it is possible to adjust the direction of the detector 29. The detector 29 is a measurement apparatus having a two-dimensional structure, and includes a CCD.

The moving unit 30 is disposed between the second stage 27 and the detector 29, and allows the detector 29 to move in a radial direction with respect to the specimen 23.

Thus, by correcting an interval $D_2$ between the specimen 23 and the detector 29 using the moving unit 30, the preciseness of measurements is improved by reducing a mechanical clearance in the interval $D_2$ between the specimen 23 and the detector 29.

The moving unit 30 allows for precise control of the movement of the detector 29, and is preferably a linear stepping motor. Also, the moving unit 30 may include a rotational driving motor and a lead screw instead of the linear stepping motor.

The analysis of the crystal structure using the X-ray diffractometer according to an embodiment of the present invention will execute as follows.

The X-ray generated by the X-ray generator 21 is projected onto the specimen 23. The projected X-ray is diffracted by a diffraction angle 28 depending on the crystal structure of the specimen 23. The angle θ is an inherent value depending on the crystal structure of the specimen 23, and is used to obtain a distance between lattices according to Bragg's law.

After a distance $R_2$ between a position where the diffracted light is detected and center of the detector 29 is measured, the diffraction angle 2θ can be obtained from the relationship between the interval $D_2$ and the distance $R_2$.

The relationship between the diffraction angle 2θ, the distance $R_2$ and the interval $D_2$ is.

$$\tan(90° - 2θ) = \frac{R_2}{D_2} \qquad \text{Equation 1}$$

and solving for 2θ gives

$$2θ = \tan^{-1}\frac{D_2}{R_2} \qquad \text{Equation 2}$$

Accordingly, the diffraction angle 2θ can be obtained from the interval $D_2$ and the distance $R_2$.

A method of correcting a measured position of the X-ray diffractometer according to any embodiment of the present invention will now be described in detail.

First, a specimen whose crystal structure is known to those skilled to the art, for example, a germanium (Ge) single crystal, is loaded on the first stage 25.

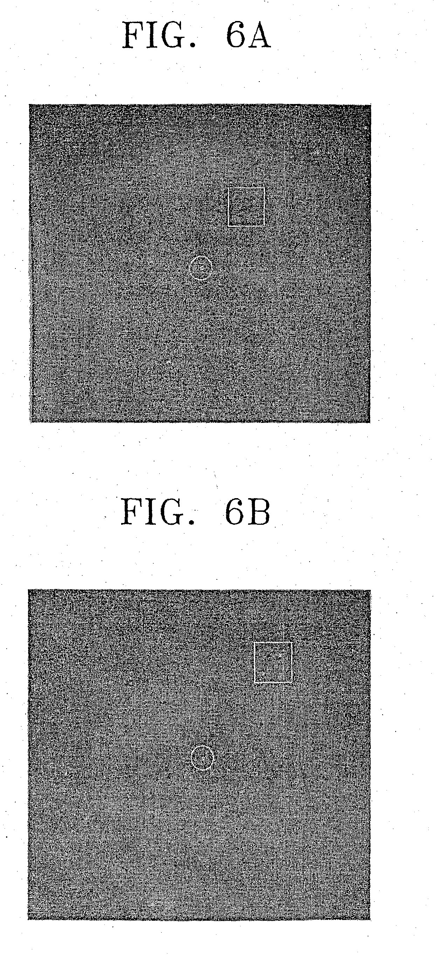

Then, the diffraction angle 2θ is measured while moving the detector 29 with the moving unit 30. FIGS. 6A and 6B show results of peak values of diffracted light detected while the moving unit 30 moved the detector 29. On the basis of the detection results, the diffraction angle 2θ can be calculated using the aforementioned equations 1 and 2.

The measurement of the diffraction angle 2θ is performed by continuously or intermittently detecting the variation of the diffracted X-ray according to the movement of the moving unit 30.

Thereafter, an error between a measured interval between lattices of the specimen obtained from the measured diffraction angle 2θ and an actual interval between lattices of the actual specimen is calculated. From this result, a required variation in the interval $D_2$ between the specimen 23 and the detector 29 can be calculated.

Also, through the aforementioned measurement, an error in the central position of the detector 29 can be detected.

Lastly, by moving the detector 29 by a distance corresponding to the required variation in the calculated interval $D_2$, the measurement position can be corrected.

Moreover, the method of correcting the measurement position may further include: detecting a deviation in the central position of the detector 29; and correcting the central position on the basis of the detected deviation. In other words, the X-ray diffracted by the specimen is detected by the detector 29 while moving the detector 29 with moving the moving unit 30. From the detected X-ray, the deviation in the central position of the detector 29 is measured.

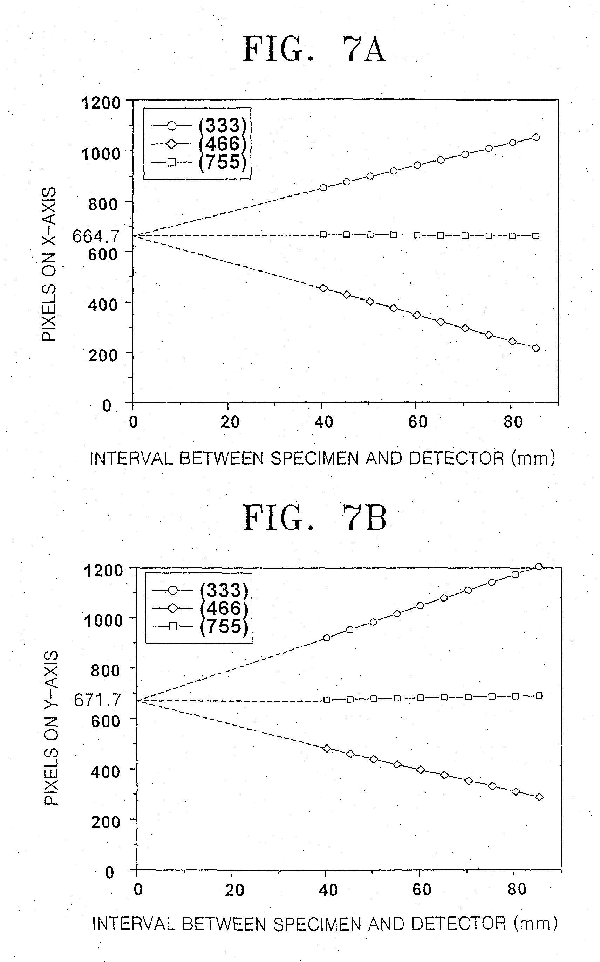

FIGS. 7A and 7B are graphs respectively showing variations in the peak position of the diffracted light with respect to variations in the interval between the specimen 23 and the detector 29 in X-axis and Y-axis, respectively, when specimens having crystal structures with crystal faces with (333), (466) and (755) orientations are selected.

Referring to FIGS. 7A and 7B, as the peak positions and the interval $D_2$ between the specimen 23 and the detector 29 are linearly related. Accordingly, as expressed by dotted lines in FIGS. 7A and 7B, lines corresponding to the peak values of the respective specimens are extending to, a point where they meet, which is determined to be a center of the X-axis and Y-axis, respectively. In the present embodiment, when the detector 29 has a resolution of 1200×1200, the detector's center is positioned at pixel 664.8 on the X-axis and at pixel 671.7 on the Y-axis. If the lead lines expressed by dotted lines do not intersect at a single point, the detector's central position can be adjusted by adjusting the interval $D_2$.

Measurement preciseness in the case where the position of the detector 29 has been corrected and in a reference case where the position of the detector 29 has not been corrected will be compared with reference to the table 1.

[Table 1]

| Interval $D_2$ | Interval between lattices [nm] | | | Angle [Deg.] | | | |
|---|---|---|---|---|---|---|---|
| | a | b | c | α | β | γ | |
| | a : b : c = 1 : 1 : 1 | | | 90 | 90 | 90 | Specimen |
| 40 mm | 0.56463 | 0.55496 | 0.57891 | 91.40253 | 88.16752 | 92.54853 | Comparative Exam. |
| 40.35 mm | 0.56641 | 0.56630 | 0.56456 | 90.35142 | 90.37157 | 90.09848 | Embodiment Exam. |

Table 1 illustrates results when a Ge single crystal having a lattice structure of which a crystal face is (1, 1, 1) and the angles α, β, and γ between lattices being all 90° was used as a specimen for analysis.

In the reference case, after the distance $R_2$ was obtained when the interval $D_2$ between the specimen 23 and the detector 29 was fixed to 40 mm, the lattice constants a, b and c, and the angles α, β, and γ were obtained using the equations 1 and 2.

It was observed that the measured value in the actual lattice structure of the Ge had a deviation of $12.05 \times 10^{-3}$ nm, and the measured value in the actual angle had a deviation of 2.27°.

On the other hand, in case of the embodiment example, the interval $D_2$ was corrected and set to 40.35 mm, and the lattice constants a, b and c, and the angles α, β, and γ were obtained.

It was observed that the measured value in the actual lattice structure of the Ge had a deviation of $1.04 \times 10^{-3}$ nm, and the measured value in the actual angle had a deviation of 0.15°. In other words, by using the X-ray diffractometer according to the embodiment of the present invention and performing the correction, it was proved that the deviation in the lattice structure and the deviation in the angle were remarkably improved.

The X-ray diffractometer according to the present invention has improved measurement preciseness in the analysis of a crystal structure of a specimen since the interval between a detector and the specimen is adjustable.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. An X-ray diffractometer comprising:

   an X-ray generator;
   a first stage on which a specimen is loaded;
   a detector for detecting an incident X-ray projected by the X-ray generator and diffracted by the specimen;
   a second stage on which the detector is installed; and
   a moving unit disposed between the second stage and the detector and arranged to move the detector such that an interval between the specimen and the detector is variable.

2. The X-ray diffractometer of claim 1, wherein the moving unit comprises a linear stepping motor.

3. The X-ray diffractometer of claims 1 or 2, wherein the first stage is arranged to rotate such that an inclination angle of the specimen with respect to the X-ray generator is adjustable.

4. The X-ray diffractometer according to one of claims 1 to 3, wherein the second stage rotates such that an installation direction of the detector is adjustable.

5. A method for correcting a measurement position of an X-ray diffractometer, the method comprising:

   loading the specimen on a first stage of an X-ray generator, the X-ray generator having the first stage, a detector detecting an incident X-ray projected by the X-ray generator and diffracted by the specimen, a second stage on which the detector is installed, and a moving unit disposed between the second stage and the detector and arranged to move the detector such that an interval between the specimen and the detector is variable;
   continuously or intermittently detecting the X-ray diffracted by the specimen with the detector while moving the detector with the moving unit to measure a diffraction angle $2\theta$ of the specimen;
   calculating an error between a lattice interval of the specimen calculated from the diffraction angle $2\theta$ and an actual lattice interval of the specimen and calculating a required variation in an interval $D_2$ between the specimen and the detector from the calculated error; and
   moving the detector by a width corresponding to the required variation in the calculated interval $D_2$,

   wherein the crystal structure of the specimen is known beforehand.

6. The method of claim 5, further comprising:

   detecting the X-ray diffracted by the specimen with the detector while moving the detector with the moving unit, and then detecting a deviation in a central position of the detector; and
   correcting the central position of the detector from the detected deviation.

# FIG. 1 (PRIOR ART)

# FIG. 2 (PRIOR ART)

# FIG. 3

# FIG. 4

# FIG. 5

X-선

23

29

# FIG. 6A

# FIG. 6B

# FIG. 7A

INTERVAL BETWEEN SPECIMEN AND DETECTOR (mm)

# FIG. 7B

INTERVAL BETWEEN SPECIMEN AND DETECTOR (mm)

European Patent
Office

**EUROPEAN SEARCH REPORT**

Application Number

EP 04 25 4087

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 379 813 A (ANVAR) 1 September 1978 (1978-09-01) | 1-4 | G01N23/207 |
| A | * page 1, paragraph 1; figure 1 * * page 2, line 10 - page 3, line 5 * * page 3, line 28 - line 39 * ----- | 5,6 | |
| X | US 4 475 225 A (GALY JEAN ET AL) 2 October 1984 (1984-10-02) | 1-4 | |
| A | * column 1, line 54 - line 61 * * column 2, line 37 - column 3, line 2; figure 1 * ----- | 5,6 | |
| X | US 4 199 678 A (LADELL JOSHUA) 22 April 1980 (1980-04-22) * column 3, line 8 - line 51; figure 1 * ----- | 1-4 | |
| X | US 4 686 631 A (RUUD CLAYTON O) 11 August 1987 (1987-08-11) | 1-4 | |
| A | * column 3, line 14 - line 18 * * column 3, line 64 - column 4, line 1 * * column 7, line 58 - column 13, line 2; figures 1,3 * ----- | 5,6 | TECHNICAL FIELDS SEARCHED (Int.Cl.7) |
| A | RUUD C O ET AL: "Displacement errors in the application of portable X-ray diffraction stress measurement instrumentation" JOURNAL OF METALS USA, vol. 36, no. 2, February 1984 (1984-02), pages 32-38, XP001202168 ISSN: 0148-6608 * the whole document * ----- | 5,6 | G01N |

The present search report has been drawn up for all claims

| Place of search | Date of completion of the search | Examiner |
|---|---|---|
| Munich | 28 October 2004 | Rouault, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 4087

This annex lists the patent family members relating to the patent documents cited in  the above-mentioned European search report.
The members are as contained in the European Patent Office EDP file on
The European Patent Office is in no way liable for these particulars which are merely  given for the purpose of information.

28-10-2004

| Patent document cited in search report | | Publication date | Patent family member(s) | | Publication date |
|---|---|---|---|---|---|
| FR 2379813 | A | 01-09-1978 | FR | 2379813 A1 | 01-09-1978 |
| US 4475225 | A | 02-10-1984 | FR | 2487079 A1 | 22-01-1982 |
| | | | DE | 3128355 A1 | 09-06-1982 |
| | | | GB | 2081440 A ,B | 17-02-1982 |
| US 4199678 | A | 22-04-1980 | AU | 525463 B2 | 04-11-1982 |
| | | | AU | 5497380 A | 06-08-1981 |
| | | | CA | 1141483 A1 | 15-02-1983 |
| | | | DE | 3060311 D1 | 09-06-1982 |
| | | | EP | 0014500 A1 | 20-08-1980 |
| | | | ES | 8102356 A1 | 01-04-1981 |
| | | | JP | 1299870 C | 31-01-1986 |
| | | | JP | 55124050 A | 24-09-1980 |
| | | | JP | 60022292 B | 01-06-1985 |
| US 4686631 | A | 11-08-1987 | DE | 3683566 D1 | 05-03-1992 |
| | | | EP | 0214183 A1 | 18-03-1987 |
| | | | JP | 6040032 B | 25-05-1994 |
| | | | JP | 62502912 T | 19-11-1987 |
| | | | WO | 8604677 A1 | 14-08-1986 |

EPO FORM P0459

For more details about this annex : see Official Journal of the European Patent Office, No. 12/82